(19) Europäisches Patentamt
European Patent Office
Office européen des brevets

(11) **EP 0 939 885 B1**

(12) **EUROPEAN PATENT SPECIFICATION**

(45) Date of publication and mention
of the grant of the patent:
**06.03.2002   Bulletin 2002/10**

(51) Int Cl.⁷: $G01J\ 1/44$, $H04B\ 10/158$

(86) International application number:
**PCT/DK97/00534**

(21) Application number: **97913120.8**

(22) Date of filing: **21.11.1997**

(87) International publication number:
**WO 98/23933 (04.06.1998 Gazette 1998/22)**

(54) **A METHOD AND AN OPTICAL RECEIVER FOR MEASURING OPTICAL POWER**

VERFAHREN UND OPTISCHER EMPFÄNGER ZUR OPTISCHEN LEISTUNGSMESSUNG

PROCEDE ET RECEPTEUR OPTIQUE DE MESURE DE PUISSANCE OPTIQUE

(84) Designated Contracting States:
**DE DK FR GB IT**

(30) Priority:  **22.11.1996  DK 133696**

(43) Date of publication of application:
**08.09.1999   Bulletin 1999/36**

(73) Proprietor: **TELLABS DENMARK A/S**
**2750 Ballerup (DK)**

(72) Inventor: **JORGENSEN, Morten**
**DK-4000 Roskilde (DK)**

(74) Representative: **Boesen, Johnny Peder et al**
**Hofman-Bang Zacco A/S Hans Bekkevolds Allé 7**
**2900 Hellerup (DK)**

(56) References cited:
**DE-C- 4 121 400**          **JP-A- 3 027 608**
**US-A- 4 473 745**          **US-A- 4 793 704**

EP 0 939 885 B1

**Description**

The invention relates to a method and an optical receiver for measuring optical power by means of an avalanche photodiode, wherein an electrical signal is generated in response to and as an indication of the optical power incident on the photodiode. The electrical signal is determined as a function of a current generated in the photodiode by the optical power when the incident optical power is lower than a selected limit value, and the photodiode current is limited to a constant value when the incident optical power exceeds this limit value.

Optical systems, such as e.g. fibre transmission systems for telecommunications purposes, utilize optical receivers to convert optical power into a corresponding electrical signal. It may be a receiver for communications signals proper, or merely a unit for measuring the mean value of the received optical power. The active component in such receivers will frequently be a photodiode through which a current is generated in response to the incident optical power. This current is frequently referred to as the photocurrent. Usually, the current in the photodiode will be substantially proportional to the optical power incident on the photodiode, so that a greater optical power will mean a greater current. When the current in the diode increases, increasing electrical power will dissipate in the diode, whose temperature therefore also increases. This puts an upper limit to how much current and thus how much optical power the diode can tolerate.

For certain photodiode types, such as e.g. avalanche photodiodes, this upper limit of the photocurrent means that their dynamic range for the received optical power is considerably smaller than for other types of optical receivers. Since, however, the avalanche photodiodes have other advantages in optical receivers, e.g. a considerably better sensitivity at low optical powers, it is desirable to expand their dynamic range upwardly.

US Patent No. 4 473 745 discloses an optical receiver, in which the photodiode is a p-i-n diode and the dynamic range is expanded by coupling a forward-biased corresponding p-i-n diode in series with the photodiode instead of a resistor like before. This reduces the voltage swing, which is passed on to an amplifier input, thereby achieving an improved dynamic range. This method, however, is applicable only with p-i-n diodes, and the avalanche photodiodes already have a considerably smaller dynamic range than the p-i-n diodes.

JP Patent Application No. 3-027 608 discloses an optical receiver using an avalanche photodiode. At small values of the incident optical power, the current through the diode increases substantially in proportion to the optical power. The current is converted by means of a small resistor to a corresponding voltage value, which may thus be used as a measure of the incident optical power. At great values of the incident optical power, the current through the diode is limited to a constant value to avoid overloading the amplifier. This also protects the diode against destruction because of a too high temperature; but it affords no possibility of expanding the dynamic range so that also great values of optical power can be measured by means of the diode, it being impossible with this circuit to measure the optical power when the current is limited.

Accordingly, an object of the invention is to provide a method of the type stated in the opening paragraph in which the dynamic range for the measurement of the incident optical power may be expanded to considerably greater values of the optical power than has been possible in the past.

This is achieved according to the invention in that when the incident optical power exceeds the limit value, the electrical signal, which is indicative of the optical power incident on the photodiode, is substantially determined so that it comprises a contribution which is a function of the voltage across the photodiode.

When the current in an avalanche photodiode for great values of the optical power is kept at a constant level, the voltage across the diode drops instead when the optical power increases, as the multiplication factor of the diode is voltage-dependent. When the optical power increases, the multiplication factor arid thus the voltage. across the diode drop. The voltage drop may therefore be used as a measure of the dynamic power in this range, and the dynamic range has thus been expanded considerably.

An expedient embodiment is achieved when the photodiode is provided with a constant supply voltage for optical powers lower than the limit value, and the electrical signal is determined so that it is proportional to the current in the photodiode, as stated in claims 2 and 3.

When, as stated in claim 4, the incident optical power exceeds the limit value, the electrical signal may advantageously be determined so that said contribution is proportional to the difference between a fixed supply voltage and the voltage across the photodiode, since this will result in a signal which increases with increasing optical power.

When, as stated in claim 5, the electrical signal for optical powers above the limit value is determined as the sum of a contribution proportional to the current in the photodiode and a contribution proportional to the difference between a fixed supply voltage and the voltage across the photodiode, it is ensured that the same electrical signal may be used as a measure of the incident optical power in the entire expanded dynamic range.

A particularly expedient embodiment is obtained when, as stated in claim 6, an InGaAs avalanche photodiode is used, since this diode type has a substantially linear relation between the incident optical power and the voltage drop across the diode when the diode current is kept constant.

As mentioned, the invention also relates to an optical receiver of the stated type. When, as stated in claim 7, the receiver comprises means for determining the electrical signal so that it comprises a contribution which is a function of the voltage across the photodiode when the incident optical power exceeds the limit value, it is ensured - as described above - that the voltage drop may be used as a measure of the optical power for great values of the optical power, and the dynamic range of the receiver has thus been expanded considerably.

An expedient embodiment is obtained, as stated in claims 8 and 9, when the receiver, for optical values lower than the limit value, can supply the diode with a constant supply voltage and determine the electrical signal so that it is proportional to the current in the photodiode.

When the incident optical power exceeds the limit value, the receiver may advantageously be adapted to determine said contribution so that it is proportional to the difference between a fixed supply voltage and the voltage across the photodiode, as stated in claim 10, since this results in a signal which increases with increasing optical power.

When, as stated in claim 11, the receiver is capable of determining the electrical signal for optical powers above the limit value as the sum of a contribution proportional to the current in the photodiode and a contribution proportional to the difference between a fixed supply voltage and the voltage across the photodiode, it is ensured that the same electrical signal may be used as a measure of the incident optical power in the entire expanded dynamic range.

A particularly expedient embodiment is obtained when, as stated in claim 12, the photodiode is an InGaAs avalanche photodiode, since this diode type has a substantially linear relation between the incident optical power and the voltage drop across the diode when the diode current is kept constant.

The invention will now be described more fully below with reference to the drawing, in which

fig. 1 shows a known optical receiver having an avalanche photodiode,

fig. 2 shows an electrical signal $V_{mon}$ as a function of incident optical power for the receiver in fig. 1,

fig. 3 shows an alternative structure of a receiver having an avalanche photodiode,

fig. 4 shows the relation between the multiplication factor M and the voltage drop for an avalanche photodiode of InGaAs type,

fig. 5 correspondingly shows 1/M as a function of the voltage drop for the same diode as fig. 4,

fig. 6 shows an example of diode voltage as a function of incident optical power for an avalanche photodiode of InGaAs type,

fig. 7 shows an example of how the invention may be implemented, and

fig. 8 shows the curve shapes of a plurality of electrical signals in the circuit of fig. 7 as a function of incident optical power.

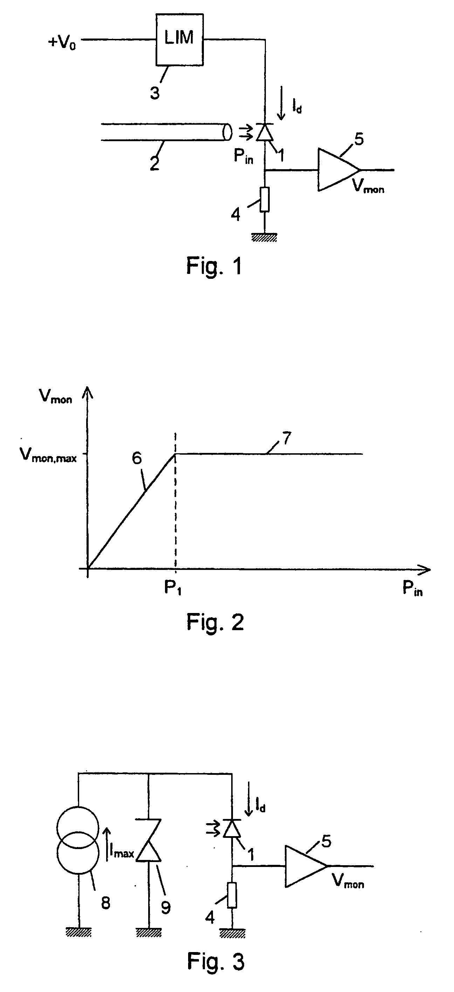

Fig. 1 shows an example of how an avalanche photodiode 1 may be used in a manner known per se in a receiver for optical signals from e.g. an optical fibre 2. The photodiode 1 is supplied with an electrical DC voltage $+V_o$. A current limiting circuit 3 and a small resistor 4 are also inserted in series with the photodiode 1. In the usual operational range of the photodiode, the current limiting circuit 3 serves as a short-circuit, and the resistor 4 is selected at a sufficiently small value for the voltage $+V_o$ to be across the diode in practice.

The resistor 4 is used for measuring the current $I_d$ through the diode, as the same current will run in the resistor and thus give rise to voltage drop across the resistor in proportion to the current. This voltage is fed to an amplifier 5, and since the diode current $I_d$, as will be described below, varies with the incident optical power $P_{in}$, the output of the amplifier 5 provides an electrical signal $V_{mon}$ which may be used as an indication of the incident optical power.

The circuit shown has a relatively limited bandwidth. For low-frequency communications signals, it may be used for receiving these, while for high-frequency communications signals it may be used for measuring the optical mean power. In this situation, the communications signals are received by a more complex receiver circuit.

The photodiode 1 has the property that the diode current $I_d$, when the diode is biased by a suitable bias voltage, is proportional to the optical power $P_{in}$ incident on the diode. For photodiodes which are not of avalanche type, the diode current $I_d$ is given by the expression $I_d = R \cdot P_{in}$, where R is called the responsivity of the diode and is a constant for the diode type concerned. In an avalanche photodiode, because of avalanche multiplication, the current will be a multiplication factor M greater than the corresponding current without avalanche multiplication, and the diode current will therefore be given by the expression $I_d = M \cdot R \cdot P_{in}$.

M depends on the voltage across the diode, but since this will be constant here, as mentioned, also M will be constant and the current will therefore vary in proportion to $P_{in}$.

If $V_{mon}$, which corresponds to $I_d$, is plotted as a function of $P_{in}$, a straight line 6 will be obtained, as shown in fig. 2. The linear relationship between $P_{in}$ and $V_{mon}$ makes it easier to use the diode for measuring the optical power, and in case of low-frequency signals it lends itself as a receiver in both analog and digital applications.

However, there is an upper limit to how great the current $I_d$ may be, since a too great current can overload the amplifier 5 and dissipate so much thermal energy in the diode that this is destroyed. The current limiting circuit 3 is therefore adapted such that it allows currents up to a maximum value $I_{max}$ to pass unobstructedly, and to restrict greater currents to $I_{max}$. This means that when the incident optical power exceeds the value $P_1$ which corresponds to $I_{max}$, the current will be maintained at the value $I_{max}$. The same applies to the voltage $V_{mon}$ which is maintained at the value $V_{mon,max}$, as shown by the line 7 in fig. 2.

Thus:

$$V_{mon} = k_1 \cdot P_{in} \qquad \text{for } P_{in} \leq P_1$$

$$V_{mon} = V_{mon,max} \qquad \text{for } P_{in} > P_1,$$

where $k_1$ is a constant which corresponds to the inclination of the line 6 and which depends i.a. on the diode responsitivity, the multiplication, the size of the resistor 4 and the gain in the amplifier 5.

It should be noted that in practice the circuit will frequently be designed in another manner which is illustrated in fig. 3. The photodiode 1, the resistor 4 and the amplifier 5 are the same as in fig. 1, whereas the current limitation is established differently. A DC current generator 8 provides a constant current of $I_{max}$. At small values of the incident optical power, the diode current will be smaller than $I_{max}$, and the surplus current will instead flow through the Zener diode 9 which then keeps the voltage across the photodiode 1 constant. When the optical power increases, the diode current will reach $I_{max}$ at some time, and since the current generator cannot provide a greater current, the entire $I_{max}$ will now enter into the photodiode. The Zener diode 9 will then be ineffective, and, here too, $V_{mon}$ will have the course shown in fig. 2.

It should also be noted that a so-called current mirror may be used in order to prevent the resistor 4 from being in series with the photodiode, said current mirror being a circuit which is adapted to pass exactly the same current in two branches. The resistor and the photodiode are placed in their respective branches, and the circuit will then pass the same current through the resistor as flows in the branch having the photodiode, and, like before, the voltage drop across the resistor will be proportional to the current in the photodiode. Such a current mirror may be used, no matter whether the circuit in general is designed like in fig. 1 or like in fig. 3.

Limitation of the current as described above ensures that the diode is not destroyed when the optical power exceeds $P_1$; but it also means that the upper limit of the dynamic range of the circuit is limited to this value. This is a problem in particular for avalanche photodiodes, since the upper limit of the dynamic range for these will typically be lower than for other photodiodes, and it is therefore desired to expand the dynamic range upwards. This is made possible by the invention.

The invention is based on the finding that if the diode current for an avalanche photodiode is kept constant, while the optical power continues to increase, the voltage across the diode will decrease. The voltage across the diode may therefore be used as measure of the optical power when this exceeds the limit value $P_1$.

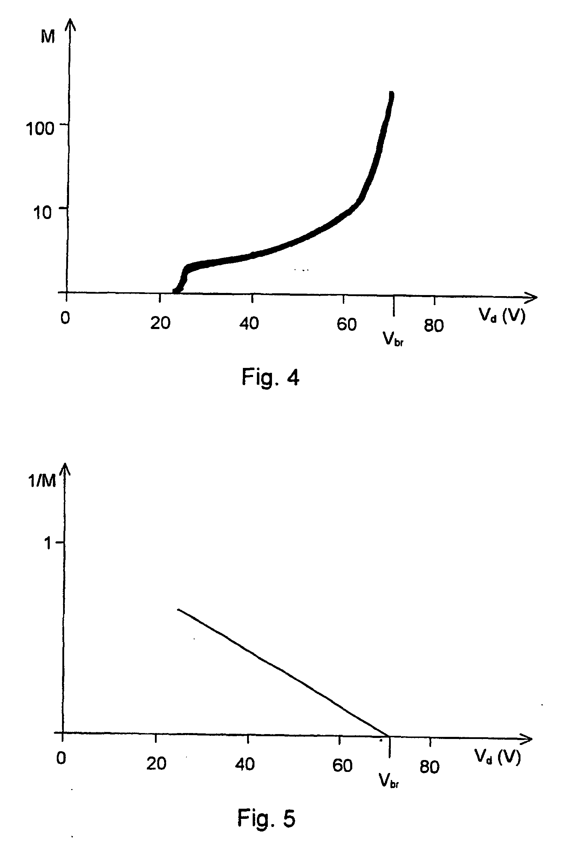

The reason is that, as mentioned above, the multiplication factor M varies with the voltage across the avalanche photodiode. Fig. 4 shows an example of M as a function of the diode voltage $V_d$ for an InGaAs avalanche photodiode. M increases infinitely at a voltage $V_{br}$ which is referred to as the breakdown voltage and which is about 70 volts for the photodiode shown. This curve signifies that M in the active range is substantially inversely proportional to $V_d$, it being also possible to plot the relation with approximation as shown in fig. 5 which shows 1/M as a function of $V_d$. Therefore, with said approximation, 1/M may be expressed as:

$$\frac{1}{M} = k_2(V_{br} - V_d),$$

where $k_2$ is a constant which indicates the inclination of the line in fig. 5, and which depends on the properties of the diode type concerned.

When the incident optical power continues to increase, while the diode current is maintained at the value $I_{max}$, the diode will still try to observe the equation $I_d = M \cdot R \cdot P_{in}$. Since $I_d$ is now equal to $I_{max}$, the equation will instead be: $I_{max} = M \cdot R \cdot P_{in}$. When $P_{in}$ increases, the equation can be satisfied only if M is reduced correspondingly at the same time. The diode voltage will therefore adjust itself to the voltage corresponding to the value of M which satisfies the equation. This voltage can therefore be found by inserting the above expression of 1/M into the equation $I_{max} = M \cdot R$

· $P_{in}$ and solving it with respect to $V_d$.

$$I_{max} = M{\cdot}R{\cdot}P_{in}$$

$$\frac{1}{M} = \frac{R{\cdot}P_{in}}{I_{max}}$$

$$k_2(V_{br}\text{-}V_d) = \frac{R}{I_{max}}{\cdot}P_{in}$$

$$V_{br}\text{-}V_d = \frac{R}{k_2{\cdot}I_{max}}{\cdot}P_{in}$$

$$V_d = V_{br} - \frac{R}{k_2{\cdot}I_{max}}{\cdot}P_{in}.$$

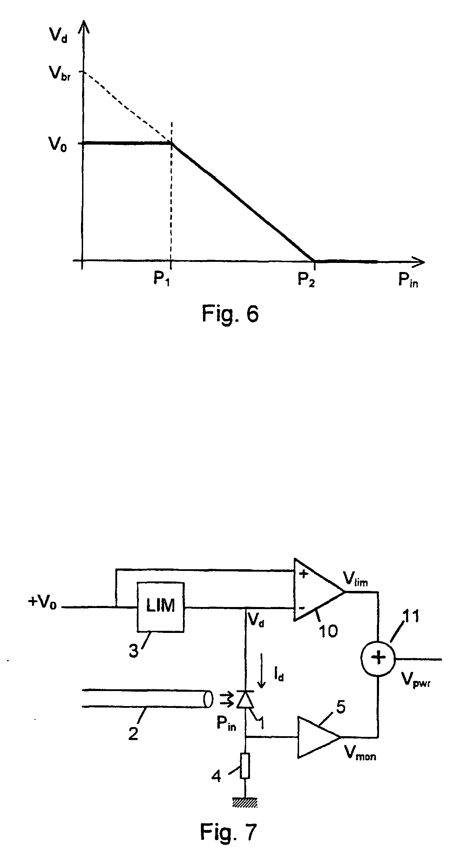

It will thus be seen that $V_d$ as a function of $P_{in}$ will substantially be linear when the diode current is maintained at the value $I_{max}$. Fig. 6 shows an example of how the diode voltage may look as a function of the incident optical power $P_{in}$. When $P_{in}$ is below the value $P_1$, the voltage is constantly $V_o$, as described above, since in this range it is the current in the diode which varies. In the range from $P_1$ to $P_2$ the voltage varies linearly according to the above expression of $V_d$. $P_2$ is the value of $P_{in}$ where $V_d$ is zero, i.e.

$$P_2 = \frac{k_2{\cdot}I_{max}{\cdot}V_{br}}{R}.$$

When $P_{in}$ exceeds $P_2$, the expression $I_{max} = M \cdot R \cdot P_{in}$ can no longer be satisfied, and the voltage will substantially be zero as the diode will cease to operate as a photodiode.

It should be noted that the above calculations apply to avalanche photodiodes of the InGaAs type. Corresponding calculations may be made for other avalanche photodiodes; but here the multiplication M as a function of the voltage across the diode will frequently have a different course, and the diode voltage $V_d$ as a function of $P_{in}$ at constant diode current will therefore not necessarily be linear as described above. This, however, may be compensated by well-known compensation circuits, if necessary for the application concerned.

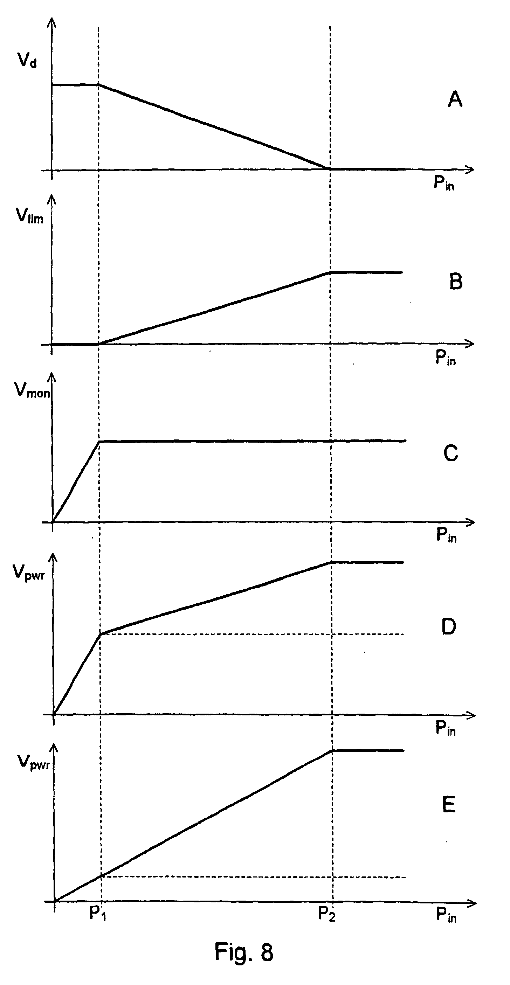

Fig. 7, which corresponds to fig. 1, shows an example of how the invention may be implemented, where, for optical powers below $P_1$, the diode current $I_d$ is used as an indicator of the optical power, and the diode voltage $V_o$ is similarly used for powers between $P_1$ and $P_2$. The diode voltage will look like the upper curve (curve A) in fig. 8. This curve corresponds completely to the one shown in fig. 6. It is noted that the voltage drop across the resistor 4 is sufficiently small for it to be disregarded with respect to $V_d$.

When the voltage across the diode decreases, a voltage drop, which is the difference between $+V_o$ and $V_d$, will occur across the current limitation circuit 3. Measurement of this voltage with a differential amplifier 10 will give an electrical signal $V_{lim}$ which will look as shown in fig. 8, curve B, and which is given by:

$$V_{lim} = 0 \qquad \text{for } P_{in} \leq P_1$$

$$V_{lim} = k_3 (V_o - V_d) \qquad \text{for } P_1 < P_{in} \leq P_2$$

$$V_{lim} = k_3 \cdot V_o \qquad \text{for } P_{in} > P_2,$$

where $k_3$ is a constant determined by the gain in the amplifier 10.

The signal $V_{lim}$ may then be added to the signal $V_{mon}$ (curve C) in an adding circuit 11 to give the signal $V_{pwr}$,

which is shown as curve D in fig. 8 and is given by:

$$V_{pwr} = V_{mon} + V_{lim} = k_1 \cdot P_{in} \qquad \text{for } P_{in} \leq P_1$$

$$V_{pwr} = V_{mon} + V_{lim} = V_{mon,max} + k_3 (V_o - V_d) \qquad \text{for } P_1 < P_{in} \leq P_2$$

$$V_{pwr} = V_{mon} + V_{lim} = V_{mon,max} + k_3 \cdot V_o \qquad \text{for } P_{in} > P_2$$

This signal may now be used as a measure of the incident optical power both below and above the limit value $P_1$, as the signal increases during the entire range up to $P_2$ and therefore gives a unique relation between $V_{pwr}$ and $P_{in}$.

As appears from curve D in fig. 8, a kink occurs at $P_1$, as the curve has a steeper inclination at small values of the incident optical power than is the case at powers above $P_1$. This will frequently be expedient, since it is desirable to have a great sensitivity at the small powers - and this is precisely one of the advantages of the avalanche photodiode over other photodiode types - while being capable of tolerating the greater powers without overloading of the diode.

Since, however, the inclination of the two parts of the curve is determined by the gains in the amplifiers 5 and 10, nothing prevents these from being selected such that the curve has the same inclination all the way from 0 to $P_2$, as shown on curve E in fig. 8. This means that there is a linear relation between the signal $V_{pwr}$ and the incident optical power in the entire dynamic range of the receiver.

It should be noted that the measuring principle shown in fig. 7 may also be applied of course if the circuit around the photodiode is designed as shown in fig. 3, since the constant voltage $V_o$ is just to be fed to the amplifier 10 from somewhere else in the circuit.

It should moreover be noted that a circuit like the one described will frequently be used in optical telecommunications systems where a bit flow of digital signals is transmitted. These signals will typically be modulated on the optical signal so that the optical power switches between a low value (corresponding to logic 0) and a high value (corresponding to logic 1). If the modulation frequency is sufficiently low, this means that switching will take place between two points on the above-mentioned curve D (or curve E). Depending on the information contents, these switchings may take place with a frequency up to the bit frequency of the transmission system concerned.

In modern transmission systems, the bit frequency may be as high as e.g. 2.5 GHz or 10 GHz, and at these high frequencies the shown circuits cannot operate, as they may have an upper limit frequency of e.g. 5 kHz. This applies particularly if the current mirror previously mentioned is used. In that case, the signal $V_{pwr}$ will no longer contain the high-frequency information, but will instead be indicative of the mean power, which, however, is also an important parameter of such transmission systems. The actual high-frequency information contents of the diode current can then be detected by a special high-frequency detector circuit which may be designed in a well-known manner.

Although a preferred embodiment of the present invention has been described and shown, the invention is not restricted to this, but may also be embodied in many other ways within the scope of the subject-matter defined in the appended claims.

## Claims

1. A method of measuring optical power by means of an avalanche photodiode (1), wherein an electrical signal is generated in response to and as an indication of the optical power ($P_{in}$) incident on the photodiode,

   said electrical signal being determined as a function of a current ($I_d$) generated in the photodiode (1) by the optical power, when the incident optical power ($P_{in}$) is lower than a selected limit value ($P_1$),

   said current in the photodiode (1) being limited to a constant value ($I_{max}$) when the incident optical power exceeds this limit value,

   **characterized in that** when the incident optical power ($P_{in}$) exceeds the limit value ($P_1$), the electrical signal is substantially determined so that it comprises a contribution which is a function of the voltage ($V_d$) across the photodiode.

2. A method according to claim 1, **characterized in that** when the incident optical power ($P_{in}$) is lower than the limit value ($P_1$), the photodiode (1) is supplied with a constant supply voltage ($V_o$).

3. A method according to claim 1 or 2, **characterized in that** when the incident optical power is lower than the limit value ($P_1$), the electrical signal is determined so that it is proportional to the current ($I_d$) in the photodiode.

4. A method according to claims 1-3, **characterized in that** when the incident optical power exceeds the limit value ($P_1$), the electrical signal is substantially determined so that said contribution is proportional to the difference between a fixed supply voltage ($V_o$) and the voltage ($V_d$) across the photodiode.

5. A method according to claim 4, **characterized in that** when the incident optical power exceeds the limit value ($P_1$), the electrical signal is determined as the sum of a contribution proportional to the current ($I_d$) in the photodiode and a contribution proportional to the difference between a fixed supply voltage ($V_o$) and the voltage ($V_d$) across the photodiode.

6. A method according to claims 1-5, **characterized in that** an InGaAs avalanche photodiode is used.

7. An optical receiver adapted to generate an electrical signal in response to and as an indication of optical power ($P_{in}$) incident on an avalanche photodiode (1), said receiver comprising:

   means for determining said electrical signal in response to a current ($I_d$) generated in the photodiode by the optical power ($P_{in}$),

   and means (3) for limiting the current in the photodiode (1) to a constant value ($I_{max}$) when the incident optical power ($P_{in}$) exceeds a selected limit value ($P_1$),

   **characterized in that** the receiver moreover comprises means (10, 11) for determining the electrical signal so that it comprises a contribution which is a function of the voltage ($V_d$) across the photodiode when the incident optical power ($P_{in}$) exceeds the limit value ($P_1$).

8. An optical receiver according to claim 7, **characterized** in that the receiver moreover comprises means for supplying the photodiode (1) with a constant supply voltage ($V_o$) when the incident optical power is lower than the limit value ($P_1$).

9. An optical receiver according to claim 7 or 8, **characterized in that** the means for determining the electrical signal in response to the current in the photodiode (1) are adapted to determine the signal so that it is proportional to the current ($I_d$) in the photodiode.

10. An optical receiver according to claims 7-9, **characterized in that** the means (10, 11) for determining the electrical signal as a function of the voltage across the photodiode (1) when the incident optical power exceeds the limit value ($P_1$), are adapted to determine said contribution so that it is proportional to the difference between a fixed supply voltage ($V_o$) and the voltage ($V_d$) across the photodiode.

11. An optical receiver according to claim 10, **characterized** in that the means for determining the electrical signal are adapted to determine the signal as the sum of a contribution proportional to the current ($I_d$) in the photodiode and a contribution proportional to the difference between a fixed supply voltage ($V_o$) and the voltage ($V_d$) across the photodiode.

12. An optical receiver according to claims 7-11, **characterized in that** the photodiode (1) is an InGaAs avalanche photodiode.

**Patentansprüche**

1. Verfahren zur Messung von Lichtleistung mittels einer Avalanche-Fotodiode (1), bei dem als Antwort auf die auf die Fotodiode auffallende Lichtleistung ($P_{in}$) und als Anzeige derselben ein elektrisches Signal erzeugt wird,

   wobei das elektrische Signal als Funktion eines durch die Lichtleistung in der Fotodiode (1) erzeugten Stroms ($I_d$) bestimmt wird, wenn die auffallende Lichtleistung ($P_{in}$) niedriger als ein ausgewählter Grenzwert ($P_1$) ist, wobei der Strom in der Fotodiode (1) auf einen konstanten Wert ($I_{max}$) begrenzt wird, wenn die auffallende Lichtleistung diesen Grenzwert überschreitet,

**dadurch gekennzeichnet, dass**, wenn die auffallende Lichtleistung ($P_{in}$) den Grenzwert ($P_1$) überschreitet, das elektrische Signal im Wesentlichen so bestimmt wird, dass es einen Beitrag umfasst, der eine Funktion der Spannung ($V_d$) über der Fotodiode ist.

2. Verfahren nach Anspruch 1, **dadurch gekennzeichnet, dass**, wenn die auffallende Lichtleistung ($P_{in}$) niedriger als der Grenzwert ($P_1$) ist, die Fotodiode (1) mit einer konstanten Versorgungsspannung ($V_o$) versorgt wird.

3. Verfahren nach Anspruch 1 oder 2, **dadurch gekennzeichnet, dass**, wenn die auffallende Lichtleistung niedriger als der Grenzwert ($P_1$) ist, das elektrische Signal so bestimmt wird, dass es proportional zum Strom ($I_d$) in der Fotodiode ist.

4. Verfahren nach den Ansprüchen 1-3, **dadurch gekennzeichnet, dass**, wenn die auffallende Lichtleistung den Grenzwert ($P_1$) überschreitet, das elektrische Signal im Wesentlichen so bestimmt wird, dass besagter Beitrag proportional zur Differenz zwischen einer festen Versorgungsspannung ($V_o$) und der Spannung ($V_d$) über der Fotodiode ist.

5. Verfahren nach Anspruch 4, **dadurch gekennzeichnet, dass**, wenn die auffallende Lichtleistung den Grenzwert ($P_1$) überschreitet, das elektrische Signal als Summe eines zum Strom ($I_d$) in der Fotodiode proportionalen Beitrags und eines zur Differenz zwischen einer festen Versorgungsspannung ($V_o$) und der Spannung ($V_d$) über der Fotodiode proportionalen Beitrags bestimmt wird.

6. Verfahren nach den Ansprüchen 1-5, **dadurch gekennzeichnet, dass** eine InGaAs-Avalanche-Fotodiode verwendet wird.

7. Optischer Empfänger, der angepasst ist, um als Antwort auf eine auf eine Avalanche-Fotodiode (1) auffallende Lichtleistung ($P_{in}$) und als Anzeige derselben ein elektrisches Signal zu erzeugen, wobei der Empfänger umfasst:

Einrichtungen zum Bestimmen des elektrischen Signals als Antwort auf einen in der Fotodiode durch die Lichtleistung ($P_{in}$) erzeugten Strom ($I_d$)
und eine Einrichtung (3) zum Begrenzen des Stroms in der Fotodiode (1) auf einen konstanten Wert ($I_{max}$), wenn die auffallende Lichtleistung ($P_{in}$) einen ausgewählten Grenzwert ($P_1$) überschreitet,

**dadurch gekennzeichnet, dass** der Empfänger außerdem Einrichtungen (10, 11) zum Bestimmen des elektrischen Signals umfasst, so dass es einen Beitrag umfasst, der eine Funktion der Spannung ($V_d$) über der Fotodiode ist, wenn die auffallende Lichtleistung ($P_{in}$) den Grenzwert ($P_1$) überschreitet.

8. Optischer Empfänger nach Anspruch 7, **dadurch gekennzeichnet, dass** der Empfänger außerdem eine Einrichtung zum Versorgen der Fotodiode (1) mit einer konstanten Versorgungsspannung ($V_o$) umfasst, wenn die auffallende Lichtleistung niedriger als der Grenzwert ($P_1$) ist.

9. Optischer Empfänger nach Anspruch 7 oder 8, **dadurch gekennzeichnet, dass** die Einrichtungen zum Bestimmen des elektrischen Signals als Antwort auf den Strom in der Fotodiode (1) angepasst sind, um das Signal so zu bestimmen, dass es proportional zum Strom ($I_d$) in der Fotodiode ist.

10. Optischer Empfänger nach den Ansprüchen 7-9, **dadurch gekennzeichnet, dass** die Einrichtungen (10, 11) zum Bestimmen des elektrischen Signals als Funktion der Spannung über der Fotodiode (1), wenn die auffallende Lichtleistung den Grenzwert ($P_1$) überschreitet, angepasst sind, um besagten Beitrag so zu bestimmen, dass er proportional zur Differenz zwischen einer festen Versorgungsspannung ($V_o$) und der Spannung ($V_d$) über der Fotodiode ist.

11. Optischer Empfänger nach Anspruch 10, **dadurch gekennzeichnet, dass** die Einrichtungen zum Bestimmen des elektrischen Signals angepasst sind, um das Signal als Summe eines zum Strom ($I_d$) in der Fotodiode proportionalen Beitrags und eines zur Differenz zwischen einer festen Versorgungsspannung ($V_o$) und der Spannung ($V_d$) über der Fotodiode proportionalen Beitrags zu bestimmen.

12. Optischer Empfänger nach den Ansprüchen 7-11, **dadurch gekennzeichnet, dass** die Fotodiode (1) eine InGaAs-Avalanche-Fotodiode ist.

**Revendications**

1. Un procédé de mesure de la puissance optique au moyen d'une photodiode (1) à avalanche, dans lequel un signal électrique est engendré en réponse à une indication de la puissance optique ($P_{in}$) incidente sur la photodiode, et en tant qu'indication de cette puissance,

   ledit signal électrique étant déterminé comme fonction d'un courant ($I_d$) engendré dans la photodiode (1) dans la puissance optique, lorsque la puissance optique incidente ($P_{in}$) est inférieure à une valeur limite sélectionné ($P_1$),
   ledit courant de la photodiode (1) étant limité à une valeur constante ($I_{max}$) lorsque la puissance optique incidente dépasse cette valeur limite,

   **caractérisé en ce que** le signal électrique est sensiblement déterminé de façon à comprendre, lorsque la puissance optique incidente ($P_{in}$) dépasse la valeur limité ($P_1$), une contribution qui est une fonction de la tension ($V_d$) aux bornes de la photodiode.

2. Un procédé selon la revendication 1, **caractérisé en ce que** la photodiode (1) est alimentée par une tension d'alimentation constante ($V_o$) lorsque la puissancc optique incidente ($P_{in}$) est inférieure à la valeur limite ($P_1$).

3. Un procédé selon la revendication 1 ou 2, **caractérisé en ce que** le signal électrique est déterminé de façon à âtre proportionnel au courant ($I_d$) dans la photodiode, lorsque la puissance optique incidente est inférieure à la valeur limite ($P_1$).

4. Un procédé selon l'une quelconque des revendications 1 à 3, **caractérisé en ce que** le signal électrique est sensiblement déterminé de façon à ce que ladite contribution soit proportionnelle a la différence entre une tension d'alimentation fixe ($V_o$) et la tension ($V_d$) aux bornes de la diode, lorsque la puissance optique électrique dépasse la valeur limite ($P_1$).

5. Un procédé selon la revendication 4, **caractérisé en ce que** le signal électrique est déterminé, lorsque la puissance optique incidente dépasse la valeur limite ($P_1$), comme la somme d'une contribution proportionnelle au courant ($I_d$) dans la photodiode et d'une contribution proportionnelle à la différence entre une tension d'alimentation fixe ($V_o$) et la tension ($V_d$) aux bornes de la diode.

6. Un procédé selon l'une quelconque des revendications 1 à 5, **caractérisé en ce qu'**une photodiode à avalanche au InGaAs est utilisée.

7. Un récepteur optique apte à engendrer un signal électrique en réponse à une indication d'une puissance optique ($P_{in}$) incidente sur la photodiode à avalanche et en tant qu'indication de cette puissance, ledit récepteur comprenant:

   un moyen de détermination dudit signal électrique en réponse à un courant ($I_d$) engendré dans la photodiode par la puissance optique ($P_{in}$),
   et un moyen (3) de limitation du courant dans la photodiode (1) à une valeur constante ($I_{max}$) lorsque la puissance optique incidente ($P_{in}$) dépasse la valeur limite sélectionnée ($P_1$);

   **caractérisé en ce que** le récepteur comprend en outre un moyen (10, 11) de détermination du signal électrique tel que ce signal comprend une contribution qui est une fonction de la tension ($V_d$) aux bornes de la photodiode lorsque la puissance optique incidente ($P_{in}$) dépasse la valeur limite ($P_1$).

8. Un récepteur optique selon la revendication 7, **caractérisé en ce que** le récepteur comprend en outre un moyen d'alimentation de la photodiode (1) par une tension d'alimentation constante ($V_o$) lorsque la puissance optique incidente est inférieure à la valeur limite ($P_1$).

9. Un récepteur optique selon la revendication 7 ou 8,
   **caractérisé en ce que** le moyen de détermination du signal électrique en réponse au courant de la photodiode (1) est adapté à déterminer le signal de façon qu'il soit proportionnel au courant ($I_d$) dans la photodiode.

10. Un récepteur optique selon l'une quelconque des revendications 7 à 9, **caractérisé en ce que** le moyen (10, 11) de détermination du signal électrique en fonction de la tension aux bornes de la photodiode (1) lorsque la puissance optique incidente dépasse la valeur limite ($P_1$) est apte à déterminer ladite contribution de façon qu'elle soit proportionnelle à la différence entre une tension d'alimentation ($V_o$) et la tension ($V_d$) aux bornes de la photodiode.

**11.** Un récepteur optique selon la revendication 10, **caractérisé en ce que** le moyen de détermination du signal électrique est apte à déterminer le signal comme égal à la somme d'une contribution proportionnelle au courant ($I_d$) dans la photodiode et une contribution proportionnelle à la différence entre une tension d'alimentation fixe ($V_o$) et la tension $V_d$) aux bornes de la photodiode.

**12.** Un récepteur optique selon l'une quelconque des revendications 7 à 11,
**caractérisé en ce que** la photodiode (1) est une diode à avalanche au InGaAs.

Fig. 1

Fig. 2

Fig. 3

11

Fig. 4

Fig. 5

Fig. 6

Fig. 7

Fig. 8